# EUROPEAN PATENT APPLICATION

(11) **EP 2 704 077 A1**
(43) Date of publication of application: **05.03.2014**
(21) Application number: 12182655.6
(22) Date of filing: 31.08.2012
(51) Int. Cl.: G06Q 20/32, G07F 7/10, G07C 9/00

(54) **Authentication system and authentication method**

(71) Applicant: NXP B.V., 5656 AG Eindhoven (NL)
(72) Inventor: Vrijen, Rutger Bastiaan, 5656 AG Eindhoven (NL); Brands, Jan Rene, 5656 AG Eindhoven (NL); Meindl, Wolfgang, 5656 AG Eindhoven (NL)
(74) Representative: Krott, Michel

(57) **Abstract**

According to an aspect of the invention, an authentication system for authenticating the identity of an electronic identification document owner is provided, which comprises an electronic identification document comprising a first communication interface and a storage unit being arranged to store reference biometric information of the electronic identification document owner, and a mobile device comprising a second communication interface being arranged to establish a communication link with the first communication interface, a camera being arranged to take a picture of the electronic identification document owner, and a program element being arranged to extract biometric information from said picture and to initiate a comparison between the reference biometric information and the extracted biometric information.

## Description

### FIELD OF THE INVENTION

The invention relates to an authentication system for authenticating the identity of an electronic identification document owner. The invention further relates to an authentication method for authenticating the identity of an electronic identification document owner.

### BACKGROUND OF THE INVENTION

The identification of people by means of electronic identification documents has become increasingly important. For example, countries such as Germany, Belgium and Italy are currently issuing electronic identity cards, which are gradually replacing conventional identity cards. These electronic identity cards typically contain an integrated circuit in which, inter alia, personal data and security keys for authentication purposes are stored.

Electronic identity cards usually take the form of so-called smart cards. The term "smart card" refers to any pocket-sized card with embedded integrated circuits which provide identification, authentication, data storage and/or application processing functionality. As background information, the white paper "Smart Card Solutions - Bringing Value to Citizens" by Thomas Röder, NXP Semiconductors, May 2012, discusses smart card solutions for the electronic identification of citizens.

Electronic identification documents of the kind set forth are particularly suitable for storing biometric information of human beings. However, in order to verify this biometric information a fixed infrastructure with document readers and biometric verification equipment is required, which is both complicated and expensive.

### SUMMARY OF THE INVENTION

It is an object of the invention to avoid the above-mentioned drawback. This object is achieved by the authentication system according to claim 1 and by the authentication method according to claim 10.

According to an aspect of the invention, an authentication system for authenticating the identity of an electronic identification document owner is provided, which comprises an electronic identification document comprising a first communication interface and a storage unit being arranged to store reference biometric information of the electronic identification document owner, and a mobile device comprising a second communication interface being arranged to establish a communication link with the first communication interface, a camera being arranged to take a picture of the electronic identification document owner, and a program element being arranged to extract biometric information from said picture and to initiate a comparison between the reference biometric information and the extracted biometric information.

According to an exemplary embodiment of the invention, the first communication interface is a radio frequency identification device.

According to a further exemplary embodiment of the invention, the second communication interface is a near field communication device.

According to a further exemplary embodiment of the invention, the mobile device is arranged to read the reference biometric information from the electronic identification document via said communication link, and the mobile device is further arranged to compare the reference biometric information with the extracted biometric information.

According to a further exemplary embodiment of the invention, the mobile device is arranged to transmit the extracted biometric information to the electronic identification document via said communication link, and the electronic identification document is arranged to compare the reference biometric information with the extracted biometric information.

According to a further exemplary embodiment of the invention, the mobile device further comprises a third communication interface being arranged to establish a connection to a fingerprint scanning device, and the mobile device is further arranged to read reference fingerprint information from the electronic identification document via said communication link and to compare the reference fingerprint information with fingerprint information received from the fingerprint scanning device.

According to a further exemplary embodiment of the invention, the mobile device is further arranged to check the authorization status of the electronic identification document owner in a central database.

According to a further exemplary embodiment of the invention, the electronic identification document is a personal identity card.

According to a further exemplary embodiment of the invention, the mobile device is a mobile phone.

According to a further aspect of the invention, an authentication method for authenticating the identity of an electronic identification document owner is provided, wherein reference biometric information is stored in a storage unit of the electronic identification document, a communication link is established between the electronic identification document and a mobile device, a picture of the electronic identification document owner is taken by the mobile device, biometric information is extracted from said picture by the mobile device, and a comparison between the reference biometric information and the extracted biometric information is initiated by the mobile device.

### BRIEF DESCRIPTION OF THE DRAWING

The invention will be described in more detail with reference to the appended drawing, which shows an exemplary embodiment of an authentication system according to the invention.

### DESCRIPTION OF EMBODIMENTS

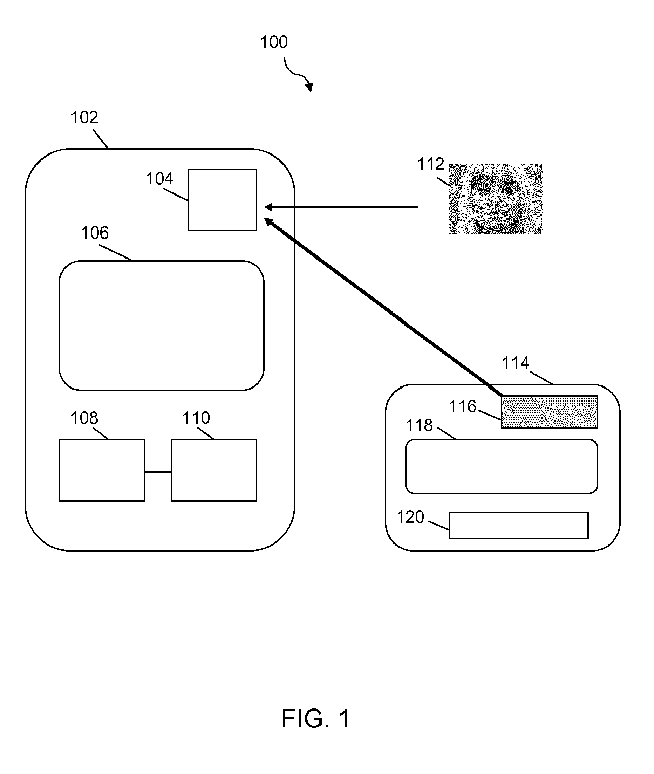

Fig. 1 shows an exemplary embodiment of an authentication system 100 according to the invention. In this embodiment, a mobile phone 102 is enabled to function as an authorized reader of identification data stored on an electronic identification document 114, and additionally as a verification device of biometric information. The basic components of the authentication system 100 are:
A. A smart-card-based electronic identification document 114, equipped with hardware and software to transmit identification data to an authorized contactless (NFC-based) reader. Optionally the electronic identification document 114 is also able to receive and process data using a smart microcontroller 120. The identification data stored in this document 114 include biometric information, notably the photo of the full face of the holder 112 of the document 114.
B. A mobile phone 102 equipped with:
   a. An NFC chip 110 which enables contactless communication between the electronic identification document 114 and the mobile phone 102.
   b. A secure element 108 (i.e. a secure microcontroller) in which keys can be stored, so that the reader can operate as an authenticated reader of the electronic identification document 114, and in which authentication applications can be executed securely so that the identification information is not compromised.
   c. A camera 104 of sufficient quality to take pictures from which biometric information can be extracted to match with biometric information stored on the document 114, and to authenticate the identity of the person presenting the document 114 with appropriately high fidelity. Optionally the mobile phone 102 comprises a communication interface (not shown) for connecting the mobile phone to a fingerprint scanning device (not shown) through which fingerprint information can be provided to the phone.
   d. Application software 106 to instruct the mobile phone's microprocessor to execute, or at least initiate, identification and biometric verification operations.

This embodiment enables a secure verification of the validity of the electronic identification document 114, and reading of identity information stored on the document 114 by the mobile phone 102. Furthermore, it enables a biometric verification that the presenter 112 of the electronic identification document 114 is indeed its rightful owner. In order to achieve this, the operator of the phone takes a picture of the face of the presenter 112. This picture is verified against the biometric information stored in the electronic identification document 114.

According to a further exemplary embodiment, the picture stored in the electronic identification document 114 is transmitted to the mobile phone 102. Subsequently the phone 102 extracts biometric markers from the newly taken picture and from the stored picture and verifies securely whether there is a match. Thus, in this embodiment the actual biometric verification is performed by the mobile phone 102.

Alternatively, the mobile phone 102 extracts biometric markers from the newly taken picture and transmits these markers to the electronic identification document 114. The microcontroller 120 on the document 114 subsequently verifies securely whether there is a match with the biometric markers stored in the document 114. Thus, in this embodiment the actual biometric verification is performed by the electronic identification document 114. In both embodiments, however, the biometric verification is initiated by the mobile phone 102.

Alternatively, or in addition to the verification of facial features, the phone 102 may be equipped with an accessory (not shown) to scan the fingerprint of the presenter 112 of the document 114, which may then be securely verified against fingerprint information stored in the electronic identification document 114.

In addition, if connectivity exists between the mobile phone 102 and a central database (not shown) through a wireless network or through a cellular network, for example, then the mobile phone 102 may check the authorization status of the individual to be granted access past the checkpoint where the mobile identification is done.

It is noted that the secure element 108 of the mobile phone 102 will store and provide authentication information (keys) in order to prove to the electronic identification document 114 that it is an authorized reader, and to be able to decrypt information transmitted by the electronic identification document 114. Furthermore, the secure element 108 will perform verification operations in a secure environment, such that the information obtained from the electronic identification document 114 cannot be compromised by malware or viruses that could possibly have infected the operating system of the mobile phone 102.

The authentication system according to the invention stimulates the use of mobile phones for the electronic identification of people. If mobile phones are accepted as authorized electronic identity (eID) readers, identity authentication will become more flexible and user-friendly. This may be particularly beneficial in countries with emerging economies where a fixed infrastructure for reading eID data does not exist yet, or where such an infrastructure would be very expensive to install. However, application examples also exist in developed economies. For instance, mobile reader infrastructure could be used along country borders or at road blocks. Other application examples are impromptu perimeter set up in cities around demonstrations or festivals, and ID scans in trains, planes or buses, for border crossing without the need to disembark passengers.

According to a further exemplary embodiment of the authentication system, the communication interface of the mobile phone 102 is an NFC device 110 which is compatible with the ISO 14443-4 standard for radio frequency identification communication. The communication interface (not shown) of the electronic identification document 114 may be a radio frequency identification interface according to ISO 14443-4, which is a common interface of contactless smart cards. By means of these communication interfaces a secure and authenticated communication link can be established between the mobile phone 102 and the electronic identification document 114.

The authentication of the identity of a card holder may, for example, be executed as follows. First, an operator of a mobile phone 102 aims the phone's camera 104 at an eID card 114. Subsequently, a program element 106 (eID app) on the phone 102 reads (i.e. detects and decodes) a M[achine] R[eadable] Z[one] 116, for example a bar code, on the eID card 114.

Then, the following steps are performed to prove to the electronic identification document 114 that the mobile phone 102 is an authorized reader. The data from the MRZ 116 is used to calculate an authentication key for the eID card 114. Subsequently, the phone's NFC device 110 is brought into close proximity of the eID card 114 and the NFC device 110 sets up a contactless communication link with the eID card 114. The eID app 106 on the phone 102 sets up a communication with a program element 118 (M[achine] R[eadable] T[ravel] D[ocument] cardlet) on the eID card 114. Subsequently, the eID app 106 authenticates itself to the MRTD cardlet 118 (e.g. using B[asic] A[ccess] C[ontrol] or E[xtended] A[ccess] C[ontrol] as specified in the MRTD standard); if this fails, the operator is informed of the failure.

Thereafter, the following steps are performed to retrieve the reference biometric information from the electronic identification document 114. The eID app 106 reads out the identification information, in particular the reference biometric information including the card holder's picture, from the MRTD cardlet 118, and the eID app 106 verifies the authenticity of the contents of the MRTD cardlet 118; if this verification fails, the operator is informed and the identification is deemed to have failed.

Thereafter, the following steps are performed to extract the biometric information from the person whose identity needs to be authenticated. The operator aims the phone's camera 104 at the card holder 112. The eID app 106 then detects the presence and location of a human face, using a face detection and extraction algorithm. For example, the Viola-Jones method, implemented as the Haar Cascade classifier method in the open-source software OpenCV, may be used for this purpose. If the face detection fails, the operator is informed of the failure.

Finally, the following steps implement the actual biometric verification. The eID app 106 compares the detected face (i.e. the extracted biometric information) with the card holder's picture as retrieved from the card 114 (i.e. the reference biometric information) using a face matching algorithm. For example, the Principal Component Analysis (PCA), implemented as Eigenface in OpenCV, may be used for this purpose. If the comparison fails, the operator is informed and the identification is deemed to have failed. If the comparison succeeds, the operator is informed and the identification is deemed to have been successful.

The above-mentioned embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: identification system
- 102: mobile device
- 104: camera
- 106: program element
- 108: secure element
- 110: NFC device
- 112: card owner
- 114: electronic ID card
- 116: Machine Readable Zone
- 118: program element
- 120: microcontroller

## Claims

1. An authentication system for authenticating the identity of an electronic identification document owner, comprising:
- an electronic identification document comprising:
- a first communication interface, and
- a storage unit being arranged to store reference biometric information of the electronic identification document owner,
- a mobile device comprising:
- a second communication interface being arranged to establish a communication link with the first communication interface,
- a camera being arranged to take a picture of the electronic identification document owner, and
- a program element being arranged to extract biometric information from said picture and to initiate a comparison between the reference biometric information and the extracted biometric information.

2. An authentication system as claimed in claim 1, wherein the first communication interface is a radio frequency identification device.

3. An authentication system as claimed in claim 1 or 2, wherein the second communication interface is a near field communication device.

4. An authentication system as claimed in any one of claims 1 to 3, wherein the mobile device is arranged to read the reference biometric information from the electronic identification document via said communication link, and wherein the mobile device is further arranged to compare the reference biometric information with the extracted biometric information.

5. An authentication system as claimed in any one of claims 1 to 3, wherein the mobile device is arranged to transmit the extracted biometric information to the electronic identification document via said communication link, and wherein the electronic identification document is arranged to compare the reference biometric information with the extracted biometric information.

6. An authentication system as claimed in any preceding claim, wherein the mobile device further comprises a third communication interface being arranged to establish a connection to a fingerprint scanning device, and wherein the mobile device is further arranged to read reference fingerprint information from the electronic identification document via said communication link and to compare the reference fingerprint information with fingerprint information received from the fingerprint scanning device.

7. An authentication system as claimed in any preceding claim, wherein the mobile device is further arranged to check the authorization status of the electronic identification document owner in a central database.

8. An authentication system as claimed in any preceding claim, wherein the electronic identification document is a personal identity card.

9. An authentication system as claimed in any preceding claim, wherein the mobile device is a mobile phone.

10. An authentication method for authenticating the identity of an electronic identification document owner, wherein:
- reference biometric information is stored in a storage unit of the electronic identification document,
- a communication link is established between the electronic identification document and a mobile device,
- a picture of the electronic identification document owner is taken by the mobile device,
- biometric information is extracted from said picture by the mobile device, and
- a comparison between the reference biometric information and the extracted biometric information is initiated by the mobile device.
